# EUROPEAN PATENT APPLICATION

(11) **EP 2 464 108 A1**
(43) Date of publication of application: **13.06.2012**
(21) Application number: 10814905.5
(22) Date of filing: 21.04.2010
(51) Int. Cl.: H04N 7/14

(54) **METHOD AND SYSTEM FOR TRANSMITTING ELECTRONIC SERVICE GUIDES**

(30) Priority: 08.09.2009 CN 200910169910
(71) Applicant: ZTE Corporation, Shenzhen, Guangdong 518057 (CN)
(72) Inventor: XU, Mingliang, Shenzhen Guangdong 518057 (CN); WU, Huaiqin, Shenzhen Guangdong 518057 (CN); HUI, Yi, Shenzhen Guangdong 518057 (CN)
(74) Representative: Manitz, Finsterwald & Partner GbR
(86) International application number: PCT/CN2010/071973
(87) International publication number: WO 2011/029303

(57) **Abstract**

A method for transmitting Electronic Service Guides (ESG) includes that: an ESG center encapsulates ESG information of mobile TV channels into Dynamic Content Delivery (DCD) contents, and transmits the encapsulated DCD contents to a DCD server; and a mobile TV terminal establishes a connection with the DCD server, and acquires the DCD contents encapsulating the ESG information from the DCD server. Accordingly, a system, ESG center and mobile TV terminal for transmitting ESGs are also provided in the present invention. By using the technical solutions of the present invention, the fussy process of the conventional method for acquiring ESG is avoided, while the real-time performance of the ESG information is guaranteed, so the overall performance of the China Mobile Multimedia Broadcasting (CMMB) mobile TV is enhanced, and the experience of users is extremely improved. And the operation for updating the correlative DCD contents by DCD services can be proceeded at background, thereby without any influence on users, and acquiring very good user experience.

## Description

### Technical Field

The present invention relates to the field of mobile multimedia broadcasting technology, and in particular, to a method and system for transmitting an electronic service guide.

### Background of the Related Art

In recent years, the digital mobile multimedia broadcasting technology and standard are developing fast, such as, the digital video broadcast handheld (DVB-H) in Europe, the media forward link only (MediaFLO) in U.S.A. and the China mobile multimedia broadcasting (CMMB) in China, etc. Various standards provide a plurality of service contents for mobile terminal users of the mobile multimedia broadcasting, such as, advertisement, weather forecast, news, sports program, variety, multimedia radio drama and film, etc. The users can select the service program of the mobile multimedia broadcasting according to its own hobby.

Along with the maturity of the 3rd generation mobile communication technology (3 Generation, 3G) network, the improvement of the performance of the mobile terminal, the rapid development of the mobile television service and the portability of the mobile terminal, it enables the mobile television service to generate a more extensive influence than the traditional television.

The mobile television service based on the CMMB is developed rapidly, and the manufacturers have released commercial terminal products already. Along with the gradually increasing of the programs provided by content providers of the mobile television, the users can enjoy the more and more excellent program contents on the mobile terminal.

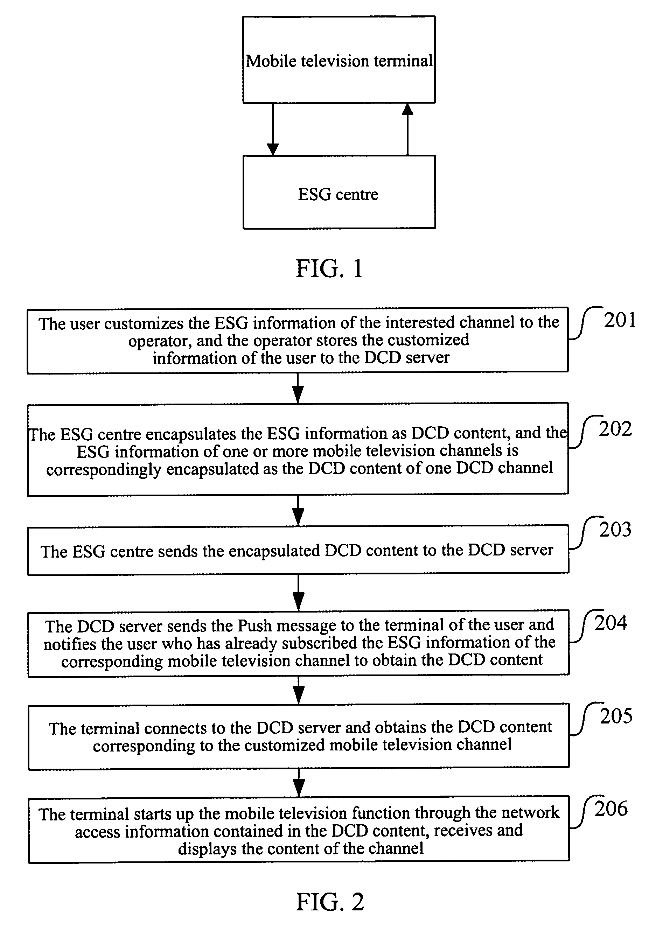

FIG. 1 shows a framework of obtaining ESG information in the related art. When the user wants to watch a certain program, the terminal needs to obtain the correlative electronic service guide (ESG) from the ESG center. Usually the process of the terminal obtaining the ESG includes that: a browser of the terminal obtains an ESG startup file from the network and gets an ESG container file containing the ESG information through the startup file, an ESG engine module analyzes the ESG container file, and finally an ESG browser queries the correlative ESG information from the ESG engine module and presents to the users.

### Content of the Invention

The above conventional method for obtaining the ESG mainly has the following problems:
1) the longer time is needed from obtaining the ESG startup file to presenting the ESG information to the user by the terminal, and if there is more ESG information, the time will be much longer; and if the user repeatedly starts up the mobile television to browse programs, the user can browse the ESG information until waiting the longer time for each time, and then selects the channel to broadcast the program, thus the user experience is worse;
2) in order to solve the problem of the ESG loading slowly, several terminals adopt to store the ESG information locally when quitting the ESG browser, and can directly import the stored ESG information into the memory when starting up next time. The main problem existed in such way is that, there is a time difference between quitting the ESG browser last time and entering the ESG browser this time, the ESG information may have already changed, and the ESG information stored locally may have been already overdue; and if several ESG access parameters change, the terminal will be unable to use the ESG information stored locally to receive the television programs;
3) the user generally cares the information of interested channels only in the process of using the mobile television; however, the conventional method for obtaining the ESG information is to obtain the whole ESG container file which includes the ESG information of the channels that the users is not interested, which not only increases the waiting time for the user, but also wastes network resources.

Therefore, how to improve the download speed of the ESG becomes the problem required to be solved immediately at present.

The technical problem to be solved by the present invention is to provide a method and system for transmitting an electronic service guide, an ESG center and a mobile television terminal, to solve the problem that the speed of the user obtaining the electronic service is slow and realize to obtain the electronic service guide quickly.

In order to solve the above technical problem, the present invention provides a method for transmitting an electronic service guide, comprising:
an electronic service guide (ESG) center encapsulating ESG information of a mobile television channel as a dynamic content delivery (DCD) content, and sending the encapsulated DCD content to a DCD server; and
a mobile television terminal establishing a connection with the DCD server, and obtaining the DCD content encapsulating the ESG information from the DCD server.

In the step of encapsulating as the DCD content, the ESG information of one or more mobile television channels is encapsulated as the DCD content of one DCD channel.

The DCD server receives customized information of a user, and after receiving the DCD content, according to the customized information of the user, notifies the user that customizes the ESG information of the corresponding mobile television channel(s) to obtain the DCD content; wherein,
the customized information comprises information of the mobile television channel(s) customized by the user.

The DCD content further encapsulates network access information; and after the step of the mobile television terminal obtaining the DCD content, the method further comprises: the mobile television terminal starting up a mobile television function according to a selection of the user, and receiving and displaying a program on the corresponding mobile television channel according to the network access information encapsulated in the obtained DCD content.

The DCD content further encapsulates introduction information of the mobile television channel(s); and after the step of the mobile television terminal obtaining the DCD content, the method further comprises: presenting the introduction information of the mobile television channel(s) encapsulated in the DCD content to the user; or
the DCD content further encapsulates a uniform resource locator; and after the step of the mobile television terminal obtaining the DCD content, the method further comprises: the mobile television terminal connecting to a network according to the uniform resource locator encapsulated in the DCD content, obtaining and displaying introduction information of the mobile television channel(s).

In order to solve the above technical problem, the present invention further provides a system for transmitting an electronic service guide, comprising: an electronic service guide (ESG) center, a dynamic content delivery (DCD) server and a mobile television terminal, wherein:
the ESG center is configured to encapsulate ESG information of a mobile television channel as a DCD content, and send the encapsulated DCD content to the DCD server;
the DCD server is configured to receive the DCD content sent by the ESG center, and send the DCD content to the mobile television terminal; and
the mobile television terminal is configured to establish a connection with the DCD server, and obtain the DCD content encapsulating the ESG information from the DCD server.

The ESG center is configured to encapsulate the ESG information as the DCD content according to the following way:
encapsulating the ESG information of one or more mobile television channels as the DCD content of one DCD channel.

The DCD server is further configured to receive customized information of a user, and after receiving the DCD content, according to the customized information of the user, notify the user that customizes the ESG information of the corresponding mobile television channel(s) to obtain the DCD content; wherein,
the customized information comprises information of the mobile television channel(s) customized by the user.

The DCD content further encapsulates network access information; and
the mobile television terminal is further configured to, after obtaining the DCD content, start up a mobile television function according to a selection of the user, receive and display a program on the corresponding mobile television channel according to the network access information encapsulated in the obtained DCD content.

The DCD content further encapsulates introduction information of the mobile television channel(s) or a uniform resource locator; and
the mobile television terminal is further configured to present the introduction information of the mobile television channel(s) encapsulated in the DCD content to the user after obtaining the DCD content; or, after obtaining the DCD content, connect to a network according to the uniform resource locator encapsulated in the DCD content, obtain and display the introduction information of the mobile television channel(s).

In order to solve the above technical problem, the present invention further provides an electronic service guide (ESG) center, comprising an encapsulation module and a sending module, wherein:
the encapsulation module is configured to encapsulate ESG information of a mobile television channel as a dynamic content delivery (DCD) content, and transmit to the sending module; and
the sending module is configured to send the encapsulated DCD content to a DCD server, so as to enable a mobile television terminal to obtain the DCD content encapsulating the ESG information from the DCD server.

The ESG center is configured to encapsulate the ESG information as the DCD content according to the following way:
encapsulating the ESG information of one or more mobile television channels as the DCD content of one DCD channel.

In order to solve the above technical problem, the present invention further provides a mobile television terminal, comprising a connection module and a dynamic content delivery (DCD) content obtaining module; wherein,
the connection module is configured to establish a connection with a DCD server; and
the DCD content obtaining module is configured to obtain a DCD content encapsulating electronic service guide (ESG) information from the DCD server; wherein,
the DCD content is the DCD content obtained by encapsulating the ESG information of a mobile television channel by an ESG center, and the DCD content is sent to the DCD server by the ESG center.

The DCD content further encapsulates network access information; and
the mobile television terminal further comprises a startup module and a display module, wherein,
the startup module is configured to, after obtaining the DCD content, start up a mobile television function according to a selection of a user; and
the display module is configured to receive and display a program on the corresponding mobile television channel according to the network access information encapsulated in the obtained DCD content.

The DCD content further encapsulates introduction information of mobile television channel(s) or a uniform resource locator; and
the display module is further configured to, after obtaining the DCD content, present the introduction information of the mobile television channel(s) encapsulated in the DCD content to the user; or, after obtaining the DCD content, connect to a network according to the uniform resource locator encapsulated in the DCD content, obtain and display the introduction information of the mobile television channel(s).

In conclusion, the present invention transmits the ESG information of the mobile television by adopting the DCD service, and the user can obtain the ESG information of the mobile television channel(s) that the user is interested quickly and conveniently. The DCD service can present the ESG information in the form of pictures and texts, etc., and the display is visualized. The present invention avoids the fussy process of the conventional method for obtaining the ESG, and the user can browse the mobile television programs without waiting a long time. At the same time, the real time of the ESG information is guaranteed, the overall performance of the CMMB mobile television is enhanced, and the user experience is extremely improved. The operation for updating the correlative DCE content by the DCD service can be performed in the background, thereby, there is no influence to the user and the very good user experience is acquired.

### Brief Description of Drawings

FIG. 1 is a framework diagram of obtaining an electronic service guide in the related art;
FIG. 2 is a flow chart of a method for transmitting an electronic service guide in the present invention; and
FIG. 3 is a framework diagram of a system for transmitting an electronic service guide in the present invention.

### Preferred Embodiments of the Present Invention

The dynamic content delivery (DCD), namely, the services specification, from an open mobile alliance (OMA), of the newsflash service, realizes that the content are pushed directly to the user terminal. The DCD system includes: a DCD server, a DCD client and a content provider (CP). The DCD content is submitted to the DCD server from the CP, and the DCD server notifies the DCD client to update the content through a Push message. The DCD service has already been accepted by users gradually because of its simple and convenient operation.

The present invention encapsulates ESG information as the DCD content through an ESG center, and the DCD server realizes the pushing and sending of the DCD content; and the terminal gets the ESG information by obtaining the DCD content.

The embodiment of the present invention is illustrated in detail in combination with the accompanying drawings in the following.

FIG. 2 shows a method for transmitting an electronic service guide in the present invention, and the method includes the following steps.

In step 201, the user customizes the ESG information of the interested channel to the operator, and the operator stores the customized information of the user to the DCD server, wherein the customized information includes the information of the interested channel by the user;
the user can customize through a phone, a short message, or going to a business hall or on the operator website.

In step 202, the ESG center encapsulates the ESG information as the DCD content, in which the ESG information of one or more mobile television channels is correspondingly encapsulated as the DCD content of one DCD channel;
for example, the ESG information of a plurality of sports channels can be encapsulated as the DCD content of one DCD channel.

If the user customizes the ESG information of a certain channel, the corresponding DCD channel is acquiescently customized.

The network access information, such as frequency point, channel number and session description protocol (SDP) information, etc., of the broadcast network in the ESG information are encapsulated as the DCD content with the introduction information of the mobile television channel(s) together; however, the information is not displayed to the user.

In step 203, the ESG center sends the encapsulated DCD content to the DCD server.

In step 204, the DCD server, after receiving the updated DCD content, sends the Push message to the terminal of the user according to the customized information of the user, and notifies the user who has already subscribed the ESG information of the corresponding mobile television channel to obtain the DCD content;
also the user can be instructed to customize the DCD channel corresponding to the mobile television channel directly, and the DCD server can notify the terminal to obtain the DCD content according to the existing specification, while there is no need to send the Push message according to the customized information, which can use the existing resources to the most limit.

In step 205, the terminal connects to the DCD server and obtains the DCD content corresponding to the customized mobile television channel.

In step 206, the user selects to check the DCD content and finds the ESG information of the mobile television channel in the DCD content, and according to a selection of the user, the terminal, through the network access information, such as the frequency point, the channel number and the SDP information, etc., of the broadcast network included in the DCD content, starts up a mobile television function, receives and displays the content of the channel.

The introduction information of the mobile television channels can be presented to the user by using the form of pictures or texts in the DCD content, and subsequently it can be extended to support the contents, such as audio, video, etc.

Certainly the user also can connect the network to check the more detailed introduction information of the mobile television channels, even the contents, such as the titbits of the programs, etc., through a uniform resource locator (URL) included in the DCD content.

The present invention can make the user obtain the ESG information of the mobile television channel that the user is interested quickly, thus quickly viewing the program that the user is interested. The DCD service specification customized by the operator generally requires setting an particular area used for displaying the content on the standby screen or the desktop, therefore, the whole operation is more convenient. The DCD content is updated in the background, of which the influence to the user is very small; and the content that the user checks every time is the latest content of all the channels that the user is interested, thus it is extremely good for experience.

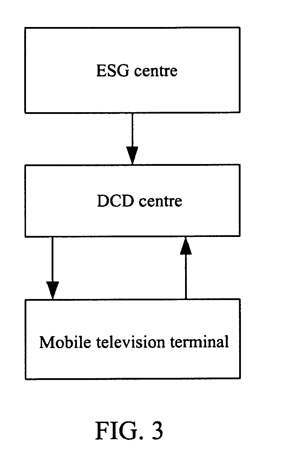

FIG. 3 shows a system for transmitting an electronic service guide in the present invention, and the system includes an ESG center, a DCD server and a mobile television terminal, wherein:
the ESG center is configured to encapsulate the ESG information of a mobile television channel as the DCD content, which can adopt the way of correspondingly encapsulating the ESG information of one or more mobile television channels as the DCD content of one DCD channel, and to send the encapsulated DCD content to the DCD server;
the mobile television terminal is configured to establish a connection with the DCD server, and obtain the DCD content encapsulating the ESG information from the DCD server, present the introduction information of the mobile television channel(s) included in the DCD content to the user after obtaining the DCD content, or connect to the network according to the uniform resource locator included in the DCD content, present the introduction information of the mobile television channel(s) to the user, start up a mobile television function according to a selection of the user, and receive and display the program(s) on the corresponding mobile television channel(s) through the network access information included in the obtained DCD content;
the DCD server is configured to receive the customized information of the user, and after receiving the DCD content, according to the customized information of the user, notify the user that customizes the ESG information of the corresponding mobile television channel(s) to obtain the DCD content; wherein, the customized information comprises information of the mobile television channel(s) customized by the user.

The other functions of the equipments in the system please refer to the description in the method content.

Accordingly, the present invention further provides an electronic service guide (ESG) center, comprising an encapsulation module and a sending module, wherein:
the encapsulation module is configured to encapsulate the ESG information of a mobile television channel as a dynamic content delivery (DCD) content, and transmit to the sending module; and
the sending module is configured to send the encapsulated DCD content to the DCD server, so as to enable the mobile television terminal to obtain the DCD content encapsulating the ESG information from the DCD server.

The ESG center is configured to encapsulate the ESG information as the DCD content according to the following way:
correspondingly encapsulating the ESG information of one or more mobile television channels as the DCD content of one DCD channel.

Accordingly, the present invention further provides a mobile television terminal, comprising a connection module and a dynamic content delivery (DCD) content obtaining module; wherein:
the connection module is configured to establish a connection with the DCD server; and
the DCD content obtaining module is configured to obtain the DCD content encapsulating the ESG information from the DCD server; wherein,
the DCD content is the DCD content obtained by encapsulating the ESG information of the mobile television channel(s) by an electronic service guide (ESG) center, and the DCD content is sent to the DCD server by the ESG center.

The DCD content further encapsulates network access information;
the mobile television terminal further comprises a startup module and a display module, wherein,
the startup module is configured to start up a mobile television function according to a selection of the user after obtaining the DCD content; and
the display module is configured to receive and display a program on the corresponding mobile television channel according to the network access information encapsulated in the obtained DCD content.

The DCD content further encapsulates introduction information of the mobile television channels or a uniform resource locator; and
the display module is further configured to present the introduction information of the mobile television channels encapsulated in the DCD content to the user after obtaining the DCD content; or, after obtaining the DCD content, connect to the network according to the uniform resource locator encapsulated in the DCD content, obtain and display the introduction information of the mobile television channels.

The above description is only the prefered embodiments of the present invention and is not intended to limit the present invention. For those skilled in the art, the present invention can have a variety of modifications and variations. Any modification, equivalent and/or improvement without departing from the spirit and principle of the present invention should be embodied in the protection scope of the present invention.

### Industrial Applicability

The present invention avoids the fussy process of the conventional method for obtaining the ESG, and the user can browse the mobile television programs without waiting a long time. At the same time, the real time of the ESG information is guaranteed, the overall performance of the CMMB mobile television is enhanced, and the user experience is extremely improved. The operation for updating the correlative DCE content by the DCD service can be performed in the background, thereby, there is no influence to the user and the very good user experience is acquired.

## Claims

1. A method for transmitting an electronic service guide, comprising:
an electronic service guide (ESG) center encapsulating ESG information of a mobile television channel as a dynamic content delivery (DCD) content, and sending the encapsulated DCD content to a DCD server; and
a mobile television terminal establishing a connection with the DCD server, and obtaining the DCD content encapsulating the ESG information from the DCD server.

2. The method according to claim 1, wherein,
in the step of encapsulating as the DCD content, the ESG information of one or more mobile television channels is encapsulated as the DCD content of one DCD channel.

3. The method according to claim 2, further comprising:
the DCD server receiving customized information of a user, and after receiving the DCD content, according to the customized information of the user, notifying the user that customizes the ESG information of the corresponding mobile television channel(s) to obtain the DCD content; wherein,
the customized information comprises information of the mobile television channel(s) customized by the user.

4. The method according to claim 1, 2 or 3, wherein,
the DCD content further encapsulates network access information; and
after the step of the mobile television terminal obtaining the DCD content, the method further comprises:
the mobile television terminal starting up a mobile television function according to a selection of the user, and receiving and displaying a program on the corresponding mobile television channel according to the network access information encapsulated in the obtained DCD content.

5. The method according to claim 4, wherein,
the DCD content further encapsulates introduction information of the mobile television channel(s); and after the step of the mobile television terminal obtaining the DCD content, the method further comprises: the mobile television terminal presenting the introduction information of the mobile television channel(s) encapsulated in the DCD content to the user; or
the DCD content further encapsulates a uniform resource locator; and after the step of the mobile television terminal obtaining the DCD content, the method further comprises: the mobile television terminal connecting to a network according to the uniform resource locator encapsulated in the DCD content, obtaining and displaying introduction information of the mobile television channel(s).

6. A system for transmitting an electronic service guide, comprising: an electronic service guide (ESG) center, a dynamic content delivery (DCD) server and a mobile television terminal, wherein:
the ESG center is configured to encapsulate ESG information of a mobile television channel as a DCD content, and send the encapsulated DCD content to the DCD server;
the DCD server is configured to receive the DCD content sent by the ESG center, and send the DCD content to the mobile television terminal; and
the mobile television terminal is configured to establish a connection with the DCD server, and obtain the DCD content encapsulating the ESG information from the DCD server.

7. The system according to claim 6, wherein,
the ESG center is configured to encapsulate the ESG information as the DCD content according to the following way:
encapsulating the ESG information of one or more mobile television channels as the DCD content of one DCD channel.

8. The system according to claim 7, wherein,
the DCD server is further configured to receive customized information of a user, and after receiving the DCD content, according to the customized information of the user, notify the user that customizes the ESG information of the corresponding mobile television channel(s) to obtain the DCD content; wherein,
the customized information comprises information of the mobile television channel(s) customized by the user.

9. The system according to claim 6, 7 or 8, wherein,
the DCD content further encapsulates network access information; and
the mobile television terminal is further configured to, after obtaining the DCD content, start up a mobile television function according to a selection of the user, receive and display a program on the corresponding mobile television channel according to the network access information encapsulated in the obtained DCD content.

10. The system according to claim 9, wherein,
the DCD content further encapsulates introduction information of the mobile television channel(s) or a uniform resource locator; and
the mobile television terminal is further configured to present the introduction information of the mobile television channel(s) encapsulated in the DCD content to the user after obtaining the DCD content; or, after obtaining the DCD content, connect to a network according to the uniform resource locator encapsulated in the DCD content, obtain and display the introduction information of the mobile television channel(s).

11. An electronic service guide (ESG) center, comprising an encapsulation module and a sending module, wherein:
the encapsulation module is configured to encapsulate ESG information of a mobile television channel as a dynamic content delivery (DCD) content, and transmit to the sending module; and
the sending module is configured to send the encapsulated DCD content to a DCD server, so as to enable a mobile television terminal to obtain the DCD content encapsulating the ESG information from the DCD server.

12. The ESG center according to claim 11, wherein:
the ESG center is configured to encapsulate the ESG information as the DCD content according to the following way: correspondingly encapsulating the ESG information of one or more mobile television channels as the DCD content of one DCD channel.

13. A mobile television terminal, comprising a connection module and a dynamic content delivery (DCD) content obtaining module; wherein,
the connection module is configured to establish a connection with a DCD server; and
the DCD content obtaining module is configured to obtain a DCD content encapsulating electronic service guide (ESG) information from the DCD server; wherein,
the DCD content is the DCD content obtained by encapsulating the ESG information of a mobile television channel by an ESG center, and the DCD content is sent to the DCD server by the ESG center.

14. The mobile television terminal according to claim 13, wherein,
the DCD content further encapsulates network access information; and
the mobile television terminal further comprises a startup module and a display module, wherein,
the startup module is configured to, after obtaining the DCD content, start up a mobile television function according to a selection of a user; and
the display module is configured to receive and display a program on the corresponding mobile television channel according to the network access information encapsulated in the obtained DCD content.

15. The mobile television terminal according to claim 14, wherein,
the DCD content further encapsulates introduction information of mobile television channel(s) or a uniform resource locator; and
the display module is further configured to, after obtaining the DCD content, present the introduction information of the mobile television channel(s) encapsulated in the DCD content to the user; or, after obtaining the DCD content, connect to a network according to the uniform resource locator encapsulated in the DCD content, obtain and display the introduction information of the mobile television channel(s).
